# EUROPEAN PATENT SPECIFICATION

(11) **EP 0 368 236 B1**
(45) Date of publication and mention of the grant of the patent: **07.09.1994**
(21) Application number: 89120586.6
(22) Date of filing: 07.11.1989
(51) Int. Cl.: B29C 63/18, H02G 1/00, H02G 1/14, B29C 55/24

(54) **Process and apparatus for inserting a rigid support in a sleeve for joints of electric cables**
Verfahren und Vorrichtung für das Einführen eines festen Trägers in einer Hülle für elektrische Kabelverbindungen
Procédé et dispositif pour introduire un support rigide dans un manchon pour connexions de câbles électriques

(30) Priority: 11.11.1988 IT 2258588
(43) Date of publication of application: 16.05.1990
(73) Proprietor: PIRELLI CAVI S.p.A., 20126 Milano (IT)
(72) Inventor: Vallauri, Ubaldo, Monza (Milan) (IT); Portas, Francesco, Quattordio (Alessandria) (IT)
(74) Representative: Giannesi, Pier Giovanni

(56) References cited:
- DE-B- 1 296 354
- DE-C- 603 391
- US-A- 2 218 904
- US-A- 4 126 927

## Description

The present invention concerns a process and apparatus for inserting a rigid support in a sleeve for joints of electric cables, said apparatus being of the type comprising a device arranged to engage a sleeve for fixing its positioning in axial direction and an actuator arranged to engage a rigid support having an outer diameter greater than the inner diameter of the sleeve and arranged to be coaxially inserted in the sleeve by applying on the support itself an advancing force oriented in axial direction.

Usually, as known, in a joint the connections between the conductors of electric cables are enclosed within sleeves that can be fundamentally classified in two classes: sleeves of heat-shrinkable material and sleeves of elastomeric material.

Both said types of sleeve require to be applied on rigid supports, generally of cylindrical tubular configuration,having an outer diameter greater than the inner diameter of the corresponding sleeve.

When the sleeve is of heat-shrinkable type, its application takes place by previously heating the sleeve itself. After the sleeve has become cool, it will maintain its dimensions also when it will be removed from the support. Then the sleeve per se will be subject to shrink, tending to return to the original dimensions, in consequence of a further flame heating.

In case of the sleeves of elastomeric material, their application is carried out through the forced insertion of the support in the sleeve and consequent elastic expansion of this latter. Consequently the sleeve will tend to assume the original dimensions as soon as it is removed from the support.

The above cited operations have mainly the purpose of causing an expansion of the sleeve in radial direction to allow an easy application of the sleeve on one of the cables before effecting their connection. When the conductors of the cables have been mutually connected, the sleeve is positioned on the jointing zone and is induced to shrink (by heating the heat-shrinkable sleeves or by removing only the support from the elastomeric sleeves) so as to grip the surfaces of the insulations of the cables.

That being stated, it is found that the apparatuses used at present for applying the sleeves, either of heat-shrinkable type or of elastomeric type, on the respective supports comprise substantially an actuator acting on the rigid support to insert it in the sleeve starting from a first end of this latter, and a device which engages the sleeve in proximity of its second end for fixing its positioning in axial direction reacting to the axial force which causes the translation of the support.

It has been found that the use of the conventional apparatuses leads easily to a series of drawbacks deriving substantially from the fact that the sleeve tends undesirably to become short during the insertion of the rigid support. Moreover it has to be considered that often the sleeves of this type have a considerable longitudinal development with respect to their diametral active section and result therefore to be very sensitive to the buckling loads applied on them during the application operation.

The result is that often the longitudinal development of the sleeves applied on the supports is considerably smaller than the original one, and that the sleeve can suffer damages owing to possible foldings that a buckling load can cause. As it is easy to understand, this situation can compromise the reliability of the sleeves and therefore that of the joints of cables formed therewith since the sleeve may result deformed in its structure, or the pressure exerted by it on the surfaces of the cables can result distributed irregularly.

In addition to the above, it is found that to limit as far as it is possible the above said drawbacks, it is necessary that the insertion of the support in the sleeve is made very slowly, with a consequent reduction of the productivity.

A solution for avoiding damages due to possible folding that a buckling load can cause on a sleeve is known from the US-A-4.126.927 patent because in the device described in the same two half shells surround the sleeve during the introduction inside it of the support.

The object of the present invention is that of overcoming all the above reported drawbacks of the known tecnique by means of a process and of an apparatus which are able to prevent effectively the sleeve from suffering reduction in lenght, irregular deformations and risks of being damaged during the insertion of the support.

This object and other ones, that will be better evident during the present description, are substantially achieved by means of a process for inserting a rigid support (3) in a sleeve (6) for joints of electric cables, comprising the steps of:
- placing the sleeve (6) between two half-shells (7a, 7b) substantially countershaped to the sleeve (6) itself to engage it along its whole lenght;
- inserting in a first end of the sleeve (6) a rigid support (3) translating this latter towards a second end of the sleeve through an axial force applied on said support and directed towards the second end, said rigid support (3) having an outer diameter greater than the original inner diameter of the sleeve (6);
- removing the sleeve (6) and support (3) from the half-shells (7a, 7b);
said process being characterized by the fact of comprising the further steps of:
- applying on the outer surface of the sleeve (6) radial centripetal forces homogeneously distributed before the insertion of the support (3);
- applying on the outer surface of the sleeve (6), during the insertion of the support (3), opposite forces parallel to the axis of the sleeve and oriented in a direction opposite to the axial force applied on the support;
- increasing during the insertion of the support (3), the intensity of said radial centripetal forces starting from the zones where the end of the support (3) gradually lies, and
- annulling the radial centripetal forces and the axial opposite forces after the support (3) has been inserted in the sleeve (6) along the whole lenght of this latter.

Always according to the present invention the above process is carried out by means of an apparatus for inserting a rigid support (3) in a sleeve (6) for joints of electric cables, comprising:
- a device (7) comprising two half-shells (7a, 7b) mutually approceable and arranged to engage a sleeve (6) for fixing its positioning in axial direction;
- an actuator (2) arranged for engaging a rigid support (3) having an outer diameter greater than the inner diameter of the sleeve (6) and arranged to be coaxially inserted in the sleeve itself by applying on the support itself an advancing force oriented in axial direction;
said apparatus being characterized by the fact that the device (7) further comprises:
- an outer supporting portion, associated to each half shell (7a, 7b), to which a plurality of pressure elements (11) is connected in an oscillating manner, said pressure elements being homogeneously distributed to define, when the half-shells are approached a containment seat wherein said sleeve (6) is housed;
- thrusting means (12, 18) acting between the supporting portion of every half-shell (7a, 7b) and the pressure elements (11), which are provided on their surface acting on the sleeve (6) with a plurality of projections homogeneously distributed, said thrusting means pushing said pressure elements towards the axis of the sleeve (6) to apply radial centripetal forces on the outer surface of this latter and to provide a contact of said outer sleeve surface with the surface provided with projections of the pressure elements (11) in order to give rise to the formation of opposite forces, distributed along the whole lenght of the sleeve (6), which oppose the thrust exerted by the support when is inserted in the sleeve (6) itself.

Further characteristics and advantages will be much more apparent from the detailed description of a preferred, but not exclusive embodiment of a process and apparatus for inserting a rigid support in a sleeve for protecting joints of electric cables, according to the present invention. Said description will be made with reference to the attached sheets of drawing, supplied by way of non-limiting example, in which:
- FIGURE 1 -: shows schematically an interrupted longitudinal section, made along line I-I of figure 2, of an apparatus according to the invention in an operation step wherein a cylindrical tubular support is inserted in part in a sleeve;
- FIGURE 2 -: is a schematic front view, partially in section, of the apparatus.

With reference to the cited figures, reference numeral 1 indicates the whole apparatus for inserting a rigid support in a sleeve for joints of electric cables, according to the present invention.

The apparatus 1 carries out an original process comprising the following steps:
- to place a sleeve between two half-shells substantially countershaped to the sleeve itself to engage this latter along its whole length;
- to apply on the sleeve radial centripetal forces homogeneously distributed on the outer surface of the sleeve;
- to insert in a first end of the sleeve a rigid support translating this latter towards a second end of the sleeve through an axial force applied on said support and directed towards the second end, said rigid support having an outer diameter greater than the original inner diameter of the sleeve;
- to increase, during the insertion of the support, the intensity of said radial centripetal forces in the zones in which the end of the support gradually lies;
- to apply on the outer surface of the sleeve, during the insertion of the support, opposite forces parallel to the axis of the sleeve, distributed along the entire length of the same and oriented in direction opposite to the axial force applied on the support;
- to annul the opposite and radial centripetal forces after the support has been inserted in the sleeve for the entire length of this latter; and
- to remove the sleeve and the support from the half-shells.

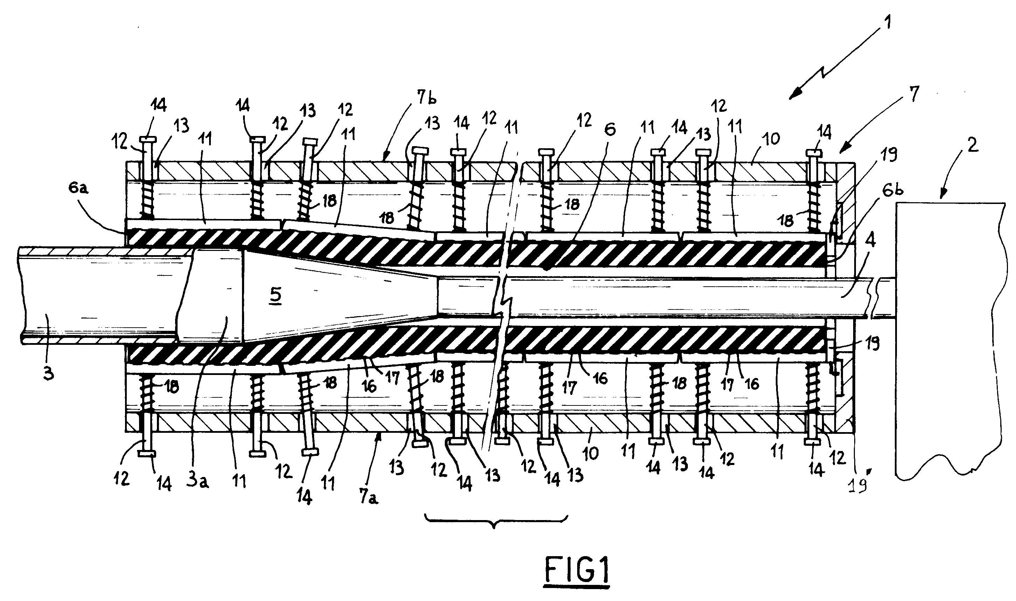

To this end, the apparatus 1 comprises substantially an actuator 2, indicated in figure 1 only schematically since known per se, arranged to engage a rigid support 3 having in the shown example, a cylindrical tubular configuration. More particularly, the actuator 2 acts on a drawbar 4 connected to an ogive 5 integral with the front end 3a of the support 3. The actuator 2 transmits to the support 3 an advancing force oriented in axial direction so that the support itself is coaxially inserted in a sleeve 6 known per se, that can indifferently be of heat-shrinkable or elastomeric type.

Moreover, the apparatus 1 comprises a device, indicated in its whole with reference numeral 7, arranged to engage the sleeve 6 for fixing its positioning in axial direction during the insertion of the support 3.

Originally, the device 7 comprises two half-shells 7a, 7b, substantially countershaped to the sleeve 6 and connected the one to the other by means of a hinge 8 or like means so that they can be mutually approached from an opening condition wherein the half-shells are separated to allow the insertion and the removal of the sleeve 6 from them, to a closing condition wherein the half-shells are approached to engage the sleeve 6 along its whole longitudinal development. In the closing condition, the half-shells 7a, 7b are fastened the one to the other, for instance through a closing bolt element 9.

Each one of the half-shells 7a, 7b has an outer supporting portion 10, shaped substantially as a cradle, to which a plurality of pressure elements 11 is connected, said elements oscillating individually with respect to the supporting portion. More particularly, each pressure element 11, having a substantially plate-like configuration, is connected to the supporting portion 10 of the corresponding half-shell 7a, 7b through a pair of stems 12 extending parallely through respective slots 13 obtained lengthwise in the supporting portion. Each stem 12 projects outside the supporting portion 10 with one end in proximity of which a stop element 14 is arranged to abut on the supporting portion itself to impede the releasing of the corresponding pressure element 11 from the said supporting portion.

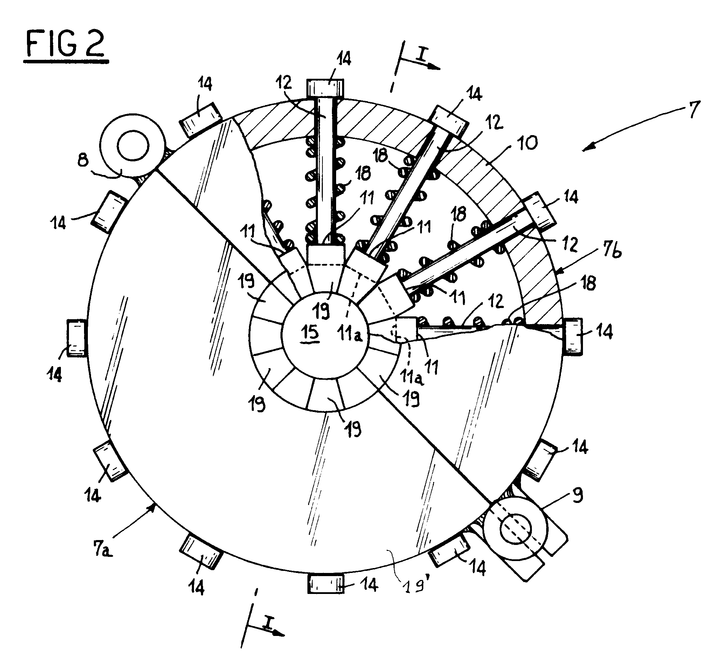

As clearly shown in figure 2, it is preferred that the pressure elements 11 are distributed according to a plurality of sectors radially arranged around a common axis coinciding with the axis of the sleeve 6. Each one of the said sectors comprises a plurality of pressure elements 11 consecutively aligned in direction parallel to the axis of the sleeve 6. In this way the pressure elements 11 are homogeneously distributed to define, when the half-shells 7a, 7b are mutually approached, a containment seat 15 countershaped to the sleeve 6 and suitable for receiving this latter as shown in figure 1.

Moreover it is foreseen that each pressure element 11 acts on the sleeve 6 through one of its contacting surface 11a which is advantageously provided with projections 16 homogeneously distributed and alternated to recesses 17, or having an undulated or irregular development, for the purposes that will better appear in the following.

Moreover, the device 7 is associated to thrusting means which operate between each one of the supporting portions 10 and the corresponding pressure elements 11 so as to push each one of these latter towards the axis of the sleeve 6 for applying radial centripetal forces on the outer surface of the sleeve itself. In the shown example these thrusting means are simply constituted by compression springs 18, each one being engaged on one of the stem 12. Alternatively, the springs 18 can be replaced with pneumatic, hydrodynamic drive systems or the like.

After what described with regard to the structure of the apparatus forming the object of the present invention, its operation is as follows.

When the half-shells 7a, 7b are in opening condition, the sleeve 6 is placed on the pressure elements 11 of the half-shell 7a which is arranged in the lower part. It is foreseen that the sleeve 6 is arranged in such a way as to have one end 6b in abutment on the shoulders 19 provided with pressure elements 11 at the front end of the device 7.

Then the half-shells 7a, 7b are closed by approaching the one near the other and fastening the closing element 9. When the half-shells 7a, 7b are in closing position, the sleeve 6, having an outer diameter greater than the diameter of the containment seat 15 defined by the pressure elements 11, obliges the pressure elements to assume such a positioning as to compress the springs 18 according to a predetermined size. In this situation, the pressure elements 11 subject the sleeve 6 to radial centripetal forces homogeneously distributed along its outer surface. The presence of these centripetal forces assures a good contact of the outer surface of the sleeve 6 to the contacting surfaces 11a of the pressure elements 11, said contact being more and more increased in consequence of the projections 16 and recesses 17 obtained on the pressure elements.

When the half-shells 7a, 7b have been closed and the above said radial centripetal forces have been obtained, the actuator 2 is set in action so that the rigid support 3, dragged by the drawbar 4 previously inserted through the sleeve 6, is inserted in the sleeve starting from a first end 6a of this latter and dragged in direction of the second end 6b abutting on the shoulders 19.

Since the support 3 has an outer diameter greater than the original inner diameter of the sleeve 6, during the insertion of the support said sleeve will be obliged to expand radially under the effect of radial centrifugal forces transmitted to it by the support 3. More particularly, the arising of these radial centrifugal forces takes place gradually in the zone wherein the front end 3a of the support 3, as well as the ogive 5, lies during the translation of the support itself.

Advantageously, in accordance with the previously described process, the radial centrifugal forces are adequately opposed at the moment in which they arise, by increasing suitably the radial centripetal forces in the zones of the sleeve 6 in which the front end 3a of the support 3 gradually lies. In fact, the radial expansion of the sleeve 6 causes a radial movement of the pressure elements 11 arranged in the zone wherein the expansion takes place. This movement causes a compression of the involved springs 18, with a consequent proportional increase of the load exerted by them on the pressure element 11 and therefore on the outer surface of the sleeve 6.

If hydraulic or pneumatic systems should be used in place of springs 18 to realize the thrusting means, it may be that the increase of the radial centripetal forces is controlled through the actuation of microswitches, proximity sensors or like means in consequence of the radial movement of the pressure elements 11.

Advantageously, the increase of the radial centripetal forces produces an increase of the friction between the outer surface of the sleeve 6 and the contacting surfaces 11a of the involved pressure elements 11. This guarantees that between the outer surface of the sleeve 6 and the contacting surfaces 11a said friction can originate opposite forces parallel to the axis of the sleeve 6 and oriented in direction opposite to the axial force that produces the forced advancing of the support 3. These opposite forces arise in the zone of the sleeve near the ogive 5 and at the front end 3a of the support 3, during the insertion of the support in the sleeve and they are distributed in a substantially homogeneous manner along the portion of the sleeve already fitted around the support.

This phenomenon is very advantageous since it prevents, as it happened in the known technique, the arising of the negative effect of the thrust force exerted on the sleeve 6. In fact, the presence in the zone of the sleeve 6 not yet fitted around the support 3 of the pressure elements 11 which carried out a ring action on this latter, produces a rise of the values of the buckling loads able to cause bendings of the sleeve in the portion in which it is not yet fitted around the support. Obviously, the above eliminates the risk that the sleeve 6 may assume an undulated development or suffer undesired and dangerous bendings during the insertion of the support 3.

To this end it is necessary to consider the fact that to assume an undulated development, the sleeve 6 should win the resistance offered by the springs 18 which should be compressed in consequence of the movement of the corresponding pressure elements 11. Therefore, the deformations of the sleeve 6 are prevented by the action of the springs 18, independently of the advantage offered by the above disclosed friction condition.

In addition to the previously disclosed advantages, the contact of the pressure elements 11 with the outer surface of the sleeve 6 prevents also this latter from becoming short in consequence of the thrust exerted by the support 3, since the sleeve is adequately held at any point of its longitudinal development.

When the support 3 has been inserted in the sleeve 6 along the entire length of the same, obliging the end 3a of the support to protrude from the end 6b of the sleeve moving radially outwardly the shoulders 19 sliding in radial direction with respect to the plate 19′, the opposite and radial centripetal forces are annulled. This can be easily obtained by separating the half-shells 7a, 7b to lead them to the opening condition. At this point the sleeve 6, together with the support inserted therein, can be removed from the apparatus 1 by previously releasing the support itself from the drawbar 4 and ogive 5.

The present invention achieves thus the aimed purposes.

The apparatus and the process forming the object of the present invention prove to be able to reduce, and even eliminate, the buckling loads on the sleeve 6 during the insertion of the support, as well as to prevent adequately the tendency by the sleeve of suffering undesired structural deformations.

It is thus assured the perfect fitting between sleeve and rigid support, eliminating the possibility that the sleeve has localized stresses that could impair the integrity and reliability of the joints of electric cables realized with it.

Another considerable advantage of the present invention consists in the fact that, thanks to the reduction of the bending risks due to the buckling loads and of the tendency to the shrinkages lengthwise of the sleeve, it is possible to insert the rigid support at a speed well higher than that practicable in the known tecnique. Obviously this gives rise to an appreciable increase of the productivity.

Another advantage of the invention is that, in the processing of the sleeve of heat-shrinkable type, the configuration of the contacting surfaces 11a of the pressure elements 11 produces corrugations on the outer surface of the sleeve.

Said corrugations are usefull when the sleeve is applied to joint electric cables since the operator has the possibility of realizing, through the disappearance or the chance of aspect of the corrugations themselves, if the heating of the sleeve for its shrinkage has been carried out in regular manner or not.

## Claims

1. Process for inserting a rigid support (3) in a sleeve (6) for joints of electric cables, comprising the steps of:
- placing the sleeve (6) between two half-shells (7a, 7b) substantially countershaped to the sleeve (6) itself to engage it along its whole lenght;
- inserting in a first end of the sleeve (6) a rigid support (3) translating this latter towards a second end of the sleeve through an axial force applied on said support and directed towards the second end, said rigid support (3) having an outer diameter greater than the original inner diameter of the sleeve (6);
- removing the sleeve (6) and support (3) from the half-shells (7a, 7b);
said process being characterized by the fact of comprising the further steps of:
- applying on the outer surface of the sleeve (6) radial centripetal forces homogeneously distributed before the insertion of the support (3);
- applying on the outer surface of the sleeve (6), during the insertion of the support (3), opposite forces parallel to the axis of the sleeve and oriented in a direction opposite to the axial force applied on the support;
- increasing during the insertion of the support (3), the intensity of said radial centripetal forces starting from the zones where the end of the support (3) gradually lies, and
- annulling the radial centripetal forces and the axial opposite forces after the support (3) has been inserted in the sleeve (6) along the whole lenght of this latter.

2. Process according to claim 1, characterized by the fact that said opposite forces arise in the zones of the sleeve (6) wherein the end of the rigid support (3), that is being inserted in the sleeve, lies.

3. Apparatus for inserting a rigid support (3) in a sleeve (6) for joints of electric cables, comprising:
- a device (7) comprising two half-shells (7a, 7b) mutually approceable and arranged to engage a sleeve (6) for fixing its positioning in axial direction;
- an actuator (2) arranged for engaging a rigid support (3) having an outer diameter greater than the inner diameter of the sleeve (6) and arranged to be coaxially inserted in the sleeve itself by applying on the support itself an advancing force oriented in axial direction;
said apparatus being characterized by the fact that the device (7) further comprises:
- an outer supporting portion, associated to each half shell (7a, 7b), to which a plurality of pressure elements (11) is connected in an oscillating manner, said pressure elements being homogeneously distributed to define, when the half-shells are brought together, a containment seat wherein said sleeve (6) is housed;
- thrusting means (12, 18) acting between the supporting portion of each half-shell (7a, 7b) and the pressure elements (11), which are provided on their surface acting on the sleeve (6) with a plurality of projections homogeneously distributed, said thrusting means pushing said pressure elements towards the axis of the sleeve (6) to apply radial centripetal forces on the outer surface of this latter and to provide a contact of said outer sleeve surface with the surface provided with projections of the pressure elements (11) in order to give rise to the formation of opposite forces, distributed along the whole lenght of the sleeve (6), which oppose the thrust exerted by the support when it is inserted in the sleeve (6) itself.

4. Apparatus according to claim 3, characterized by the fact that each pressure element (11) has a substantially plate-like configuration and is connected to the supporting portion of the respective half-shell (7a, 7b) by means of a pair of stems (12) extending parallely through respective slots (13) obtained lengthwise in the supporting portion itself.

5. Apparatus according to claim 3, characterized by the fact that said thrusting means (12, 18) comprise a plurality of compression springs (18), each spring acting between the supporting portion of the corresponding half-shell (7a, 7b) and one of said pressure elements (11).

6. Apparatus according to claims 4 and 5, characterized by the fact that each one of said spring (18) is mounted along one of said stems 12.

7. Apparatus according to claim 3, characterized by the fact that said pressure elements (11) are distributed along a plurality of sectors radially arranged around a common axis coinciding with the axis of the sleeve (6), each one of said sectors comprising a plurality of pressure elements consecutively aligned in direction parallel to said axis.

## Patentansprüche

1. Verfahren zum Einführen einer starren Abstützung (3) in eine Hülse (6) für Verbindungen von elektrischen Kabeln, welches die Schritte aufweist:
- Anordnen der Hülse (6) zwischen zwei Halbschalen (7a, 7b), die im wesentlichen die Gegenform zu der Hülse (6) für einen Eingriff an ihr über ihrer ganzen Länge bilden,
- Einführen der starren Abstützung (3) in ein erstes Ende der Hülse (6) und Durchführen zu dem zweiten Ende der Hülse mit Hilfe einer Axialkraft, die auf die Abstützung ausgeübt und zum zweiten Ende gerichtet ist, wobei die starre Abstützung (3) einen Außendurchmesser hat, der größer ist als der ursprüngliche Innendurchmesser der Hülse (6),
- Entfernen der Hülse (6) und der Abstützung (3) aus den Halbschalen (7a, 7b),
gekennzeichnet durch die weiteren Schritte:
- Anlegen von radialen homogen verteilten Zentripetalkräften an die Außenfläche der Hülse (6) vor dem Einführen der Abstützung (3),
- Anlegen von entgegengesetzten Kräften parallel zur Achse der Hülse und ausgerichtet in eine Richtung entgegengesetzt zu der auf die Abstützung ausgeübten Axialkraft an die Außenfläche der Hülse (6) während des Einführens der Abstützung (3),
- Steigern der Intensität der radialen Zentripetalkräfte während des Einführens der Abstützung (3) beginnend von den Zonen aus, wo das Ende der Abstützung (3) schrittweise liegt, und
- Aufheben der radialen Zentripetalkräfte und der axialen entgegengesetzten Kräfte, nachdem die Abstützung (3) in die Hülse (6) auf deren ganzer Länge eingeführt worden ist.

2. Verfahren nach Anspruch 1, dadurch gekennzeichnet, daß die entgegengesetzten Kräfte in den Zonen der Hülse (6) entstehen, in denen das Ende der starren Abstützung (3), die in die Hülse einzuführen ist, liegt.

3. Vorrichtung zum Einführen einer starren Abstützung (3) in eine Hülse (6) für Verbindungen von elektrischen Kabeln
- mit einer Vorrichtung (7), die zwei Halbschalen (7a, 7b) aufweist, die gegenseitig annäherbar und so angeordnet sind, daß sie an einer Hülse (6) zum Fixieren ihrer Positionierung in Axialrichtung angreifen,
- mit einem Aktivator (2), der für das Angreifen an der starren Abstützung (3) angeordnet ist, die einen Außendurchmesser hat, der größer ist als der Innendurchmesser der Hülse (6) und so angeordnet ist, daß sie in die Hülse koaxial einführbar ist, wofür auf die Abstützung eine vorwärtsbewegende Kraft ausgeübt wird, die in Axialrichtung ausgerichtet ist,
dadurch gekennzeichnet, daß die Vorrichtung (7) weiterhin
- einen jeder Halbschale (7a, 7b) zugeordneten äußeren abstützenden Abschnitt, mit dem eine Vielzahl von Druckelementen (11) in einer oszillierenden Weise verbunden ist, wobei die Druckelemente homogen verteilt sind, um, wenn die Halbschalen zusammengebracht sind, einen Gehäusesitz zu bilden, in dem die Hülse (6) aufgenommen ist, und
- Drückeinrichtungen (12, 18) aufweist, die zwischen dem abstützenden Abschnitt jeder Halbschale (7a, 7b) und den Druckelementen (11) wirken, die an ihrer auf die Hülse (6) wirkenden Fläche vorgesehen sind, wobei eine Vielzahl von Vorsprüngen homogen verteilt ist, die Drückeinrichtungen die Druckelemente zur Achse der Hülse (6) drücken, um radiale Zentripetalkräfte auf die Außenfläche dieser letzteren auszuüben und um einen Kontakt der äußeren Hülsenfläche mit der mit den Vorsprüngen der Druckelemente (11) versehenen Fläche herzustellen, damit die Ausbildung entgegengesetzter Kräfte bewirkt wird, die auf der gesamten Länge der Hülse (6) verteilt sind und die dem Druck entgegenwirken, der von der Abstützung ausgeübt wird, wenn sie in die Hülse (6) selbst eingeführt wird.

4. Vorrichtung nach Anspruch 3, dadurch gekennzeichnet, daß jedes Druckelement 11 eine im wesentlichen plattenförmige Gestalt hat und mit dem abstützenden Abschnitt der jeweiligen Halbschale (7a, 7b) mittels eines Paars von Schäften (12) verbunden ist, die sich parallel durch entsprechende Schlitze (13) erstrecken, die über der Länge in dem abstützenden Abschnitt selbst vorgesehen sind.

5. Vorrichtung nach Anspruch 3, dadurch gekennzeichnet, daß die Drückeinrichtungen (12, 18) eine Vielzahl von Druckfedern (18) aufweisen, von denen jede zwischen dem abstützenden Abschnitt der entsprechenden Halbschale (7a, 7b) und einem der Druckelemente (11) wirkt.

6. Vorrichtung nach Anspruch 4 und 5, dadurch gekennzeichnet, daß jede Feder (18) längs eines der Schäfte (12) angeordnet ist.

7. Vorrichtung nach Anspruch 3, dadurch gekennzeichnet, daß die Druckelemente (11) längs einer Vielzahl von Sektoren verteilt sind, die radial um eine gemeinsame Achse angeordnet sind, welche mit der Achse der Hülse (6) zusammenfällt, wobei jeder der Sektoren eine Vielzahl von Druckelementen aufweist, die fortlaufend fluchtend in eine Richtung parallel zur Achse ausgerichtet sind.

## Revendications

1. Procédé d'introduction d'un support rigide (3) dans un manchon (6) pour l'épissage ou la connexion de câbles électriques, comprenant les étapes:
- de mise en place du manchon (6) entre deux demi-coquilles (7a, 7b) constituant sensiblement la réplique dudit manchon (6) pour l'engager sur toute sa longueur;
- d'introduction dans une première extrémité du manchon (6) d'un support rigide (3), translation de ce dernier vers une seconde extrémité du manchon sous l'effet d'une force axiale appliquée sur ledit support et dirigée vers la seconde extrémité, ledit support rigide (3) ayant un diamètre extérieur supérieur au diamètre intérieur original du manchon (6);
- d'enlèvement du manchon (6) et du support (3) des demi-coquilles (7a, 7b);
ledit procédé étant caractérisé en ce qu'il comprend les étapes supplémentaires:
- d'application sur la surface extérieure du manchon (6) de forces centripètes radiales, réparties de façon homogène avant l'introduction du support (3);
- d'application sur la surface extérieure du manchon (6), pendant l'introduction du support (3), de forces opposées parallèles à l'axe du manchon et orientées dans une direction opposée à la force axiale appliquée sur le support;
- d'augmentation, pendant l'introduction du support (3) de l'intensité desdites forces centripètes radiales à partir des zones dans lesquelles l'extrémité du support (3) arrive progressivement, et
- d'annulation des forces centripètes radiales et des forces opposées axiales après que le support (3) a été introduit dans le manchon (6) le long de la longueur entière de ce dernier.

2. Procédé selon la revendication 1, caractérisé en ce que lesdites forces opposées se développent dans des zones du manchon (6) où se trouve l'extrémité du support rigide (3), au cours de son introduction dans le manchon.

3. Appareil d'introduction d'un support rigide (3) dans un manchon (6) d'épissage ou de connexion de câbles électriques, comprenant:
- un dispositif (7) comprenant deux demi-coquilles (7a, 7b), pouvant être rapprochées mutuellement et disposées pour venir en prise sur un manchon (6) pour fixer son positionnement dans la direction axiale;
- des moyens d'actionnement (2) agencés pour engager un support rigide (3) ayant un diamètre extérieur supérieur au diamètre intérieur du manchon (6) et agencés pour être introduits coaxialement dans ledit manchon par l'application sur ledit support d'une force d'avancement orientée dans la direction axiale;
ledit appareil étant caractérisé en ce que le dispositif (7) comprend en outre:
- une partie extérieure formant support, associée à chaque demi-coquille (7a, 7b), sur laquelle est fixée une pluralité d'organes de pression (11) de manière oscillante, lesdits organes de pression étant répartis de façon homogène pour définir, lorsque les demi-coquilles sont rapprochées, un logement de réception dans lequel vient se loger ledit manchon (6);
- des moyens de poussée (12, 18) agissant entre la partie formant support de chaque demi-coquille (7a, 7b) et les organes de pression (11) qui sont pourvus, sur leur surface agissant sur le manchon (6), d'une pluralité de saillies réparties de manière homogène, lesdits moyens de poussée poussant lesdits organes de pression vers l'axe du manchon (6) pour appliquer des forces centripètes radiales sur la surface extérieure de ce dernier et pour établir un contact de ladite surface extérieure du manchon avec la surface pourvue des saillies des organes de pression (11) pour provoquer la formation de forces opposées, réparties sur toute la longueur du manchon (6), s'opposant à la poussée exercée par le support lorsqu'il est introduit dans ledit manchon (6).

4. Appareil selon la revendication 3, caractérisé en ce que chaque organe de pression (11) a une configuration sensiblement en forme de plaque et est relié à la partie formant support de la demi-coquille respective (7a, 7b) au moyen d'une paire de tiges (12) s'étendant parallèlement à travers des fentes respectives (13) ménagées longitudinalement dans ladite partie formant support.

5. Appareil selon la revendication 3, caractérisé en ce que lesdits moyens de poussée (12, 18) comprennent une pluralité de ressorts de compression (18 ), chaque ressort agissant entre la partie formant support de la demi-coquille correspondante (7a, 7b) et l'un desdits organes de pression (11).

6. Appareil selon les revendications 4 et 5, caractérisé en ce que chacun desdits ressorts (18) est monté le long de l'une desdites tiges (12).

7. Appareil selon la revendication 3, caractérisé en ce que lesdits organes de pression (11) sont distribués le long d'une pluralité de secteurs disposés radialement autour d'un axe commun coïncidant avec l'axe du manchon (6), chacun desdits secteurs comprenant une pluralité d'organes de pression alignés consécutivement dans une direction parallèle audit axe.
